Europäisches Patentamt

European Patent Office

Office européen des brevets

(11) Numéro de publication: **0 136 225**
**B1**

(12) **FASCICULE DE BREVET EUROPEEN**

(45) Date de publication du fascicule du brevet: **18.05.88**

(21) Numéro de dépôt: **84401779.8**

(22) Date de dépôt: **07.09.84**

(51) Int. Cl.⁴: **G 05 F 1/32, H 02 M 5/06,**
**C 01 B 13/11**

(54) **Dispositif d'alimentation en énergie électrique pour générateur d'ozone.**

(30) Priorité: **23.09.83 FR 8315139**

(43) Date de publication de la demande:
**03.04.85 Bulletin 85/14**

(45) Mention de la délivrance du brevet:
**18.05.88 Bulletin 88/20**

(84) Etats contractants désignés:
**BE DE GB IT NL**

(56) Documents cités:
**DE-B-1 188 228**
**DE-B-1 300 524**
**FR-A-2 456 455**
**GB-A- 613 866**
**US-A-2 857 501**

(73) Titulaire: **"DEGREMONT" Société dite:**
**183, Avenue du 18 Juin 1940**
**F-92508 Rueil-Malmaison Cédex (FR)**

(72) Inventeur: **Adatto, Maurice**
**11, rue Baron**
**F-75017 Paris (FR)**
Inventeur: **Coste, Christian**
**79 A. rue des Chantiers**
**F-78000 Versailles (FR)**

(74) Mandataire: **Armengaud, Charles**
**Cabinet ARMENGAUD AINE 3, Avenue Bugeaud**
**F-75116 Paris (FR)**

Courier Press, Leamington Spa, England.

EP 0 136 225 B1

# 0 136 225

## Description

La présente invention concerne un dispositif d'alimentation en énergie électrique d'un générateur d'ozone applicable en particulier aux générateurs à électrodes tubulaires.

Les générateurs industriels de ce type sont généralement constitués d'un ensemble de générateurs élémentaires montés en parallèle dans une même enceinte, chacun étant formé de deux électrodes conductrices séparées par un intervalle gazeux de faible épaisseur et un matériau diélectrique, généralement du verre.

Ces électrodes sont concentriques: à l'intérieur de l'électrode métallique extérieure, autour de laquelle circule l'eau de refroidissement est disposé un tube de verre fermé à une extrémité et métallisé intérieurement, cette métallisation constituant la deuxième électrode. Un espace de 2 à 3 mm dit ''de décharge'' est ménagé entre le tube de verre et le tube métallique·dans lequel circule, soit de l'oxygène pur, soit un mélange gazeux tel que l'air atmosphérique, contenant de l'oxygène.

On applique entre ces deux électrodes une différence de potentiel alternative croissante et à partir d'une certaine valeur de la tension aux bornes du générateur correspondant au potentiel disruptif du gaz, on voit apparaître dans l'espace de décharge un effluve violet traduisant la transformation partielle de l'oxygène en ozone.

La production d'ozone d'un tel générateur est une fonction croissante de la puissance électrique qui lui est appliquée et le réglage de cette production à la valeur requise se fait donc en ajustant cette puissance. Cet ajustement se fait en modifiant la valeur de la tension primaire d'un transformateur, de façon à obtenir au secondaire une tension appliquée au générateur variant entre 6 et 8 kV, valeur du potentiel disruptif et 18 kV environ en 50 Hz. Cette variation de tension est obtenue généralement grâce à un autotransformateur à curseu rs, placé dans le circuit primaire du transformateur: la puissance appliquée à un générateur élémentaire peut ainsi être modulée entre 0 et 400 watts, par exemple en déplaçant les curseurs de l'autotransformateur.

Un générateur d'ozone est électriquement du type capacitif, son facteur de puissance étant de l'ordre de 0,5; et, pour l'alimenter jusqu'à une puissance de 400 watts, il faut donc mettre en oeuvre une puissance apparente d'environ 800 voltampères. Pour des appareils de grande production comportant un grand nombre de générateurs en parallèle, cette puissance apparente peut atteindre plusieurs centraines de kVA, de l'ordre de 500 kVA pour un appareil en contenant 600. Pour éviter de faire transiter une puissance réactive élevée sur le réseau électrique basse tension d'alimentation du transformateur du générateur, on dispose généralement au primaire de ce transformateur une inductance destinée à compenser la charge capacitive du générateur, la compensation étant obtenue lorsque, si C est la capacité du générateur, L la valeur de l'inductance, f la fréquence du courant alternatif, on a l'égalité:

$$(2\pi f)^2 LC = 1$$

La présence de cette inductance permet également de limiter la valeur du courant en cas de court-circuit survenant au niveau de générateur d'ozone. Dans ce cas, en l'absence d'inductance, la valeur du courant n'est limitée que par l'impédance propre du transformateur et peut ainsi atteindre plus de vingt fois sa valeur normale, pouvant ainsi occasionner des dégâts considérables au niveau du générateur. En cas de court-circuit, la chute de tension que provoque l'inductance limite donc automatiquement à une valeur tolérable l'intensité du courant.

Ce dispositif connu d'alimentation en énergie électrique d'un générateur d'ozone présente cependant un certain nombre d'inconvénients. En effet, il met en jeu plusieurs éléments électromagnétiques de masse et d'encombrement importants, en particulier, le transformateur doit être dimensionné non pas pour la puissance active consommée par le générateur, mais pour la puissance apparente requise. Il nécessite donc la mise en oeuvre d'un autotransformateur comportant des organes mécaniques complexes de réglage, dont la fiabilité n'est pas parfaite. Il est en outre d'un prix de revient relativement élevée.

La présente invention pallie ces inconvénients en permettant l'alimentation en énergie électrique à niveau réglable d'un générateur d'ozone au moyen d'un nombre restreint d'éléments électro-magnétiques de faible encombrement, tout en augmentant la fiabilité et la sécurité de l'installation et en diminuant sensiblement le prix de revient.

Le dispositif, suivant l'invention, d'alimentation en énergie électrique d'un générateur d'ozone soumis à une haute tension alternative, obtenue à partir du réseau de distribution électrique en basse tension grâce à un transformateur élévateur de tension dont le secondaire est relié audit générateur d'ozone, et dont le primaire est alimenté en basse tension et comporte, en série, une inductance variable, est caractérisé en ce que le dit transformateur est du type à fuites magnétiques, et en ce que ladite inductance est du type à noyau magnétique saturable ayant un enroulement de commande alimenté à partir d'une source de tension continue variable.

Il est connu que la présence d'une inductance, dans le circuit d'alimentation électrique d'un générateur d'ozone, destinée à ramener le facteur de puissance du système à une valeur voisine de l'unité, provoque une surtension telle que la tension à laquelle est soumis le primaire du transformateur est supérieure à celle du réseau et varie avec la valeur de l'inductance.

On a donc pensé à faire varier cette tension et donc la puissance mise en oeuvre, en substituant à

2

**0 136 225**

l'autotransformateur de réglage, au transformateur-série et à l'inductance fixe, une inductance à saturation variable dont la valeur peut être modifiée, de façon connue, par modification des caractéristiques magnétiques de son noyau de façon à augmenter ou diminuer la surtension qu'elle engendre.

Cependant, il a été constaté qu'il n'était pas possible d'obtenir ainsi une variation de la puissance de plus de 20%, alors qu'il était souhaitable de pouvoir la faire varier dans un rapport d'au moins 1 à 10. Par ailleurs, il a été également constaté que la valeur de la tension aux bornes du transformateur n'était pas uniformément croissante avec cells de l'inductance, la courbe représentative de la valeur de la tension en fonction de celle de l'inductance étant en forme de cloche.

Suivant l'invention, on a remplacé le transformateur classique d'alimentation du générateur d'ozone par un transformateur connu sous le nom de transformateur à fuites magnétiques dont la valeur d'entrefer correspond à la création à ses bornes d'une inductance fictive compensant au moins partiellement l'effet capacitif dudit générateur et dont la puissance installée est alors ramenée de ce fait à une valeur sensiblement égale à la puissance active maximale nécessaire à l'alimentation de ce générateur. Dans ces conditions, pour une forte valeur de l'inductance variable, il s'établit à ses bornes une chute de tension venant scalairement en déduction de la tension du réseau, si bien que la tension aux bornes du primaire du transformateur d'alimentation du générateur prend une valeur inférieure à celle du réseau. Au fur et à mesure de la saturation du noyau magnétique de l'inductance, son impédance diminue et par conséquent la chute de tension qu'elle engendre; et, si elle a été convenablement choisie, la tension aux bornes du transformateur atteint à saturation une tension voisine de celle du réseau.

Suivant l'invention, la valeur de l'inductance est réglée par variation de l'intensité d'un courant continu engendrant un flux d'induction magnétique unidirectionnel modifiant le degré de saturation de ladite inductance, de façon à modifier la production d'ozone du générateur par changement de la valeur de sa. tension alternative d'alimentation.

La description qui va suivre, en référence au dessin annexé, permettra de mieux comprendre l'invention. Sur ce dessin:

la figure 1 représente schématiquement un dispositif classique d'alimentation en énergie électrique d'un générateur d'ozone,

la figure 2 représente schématiquement un dispositif suivant l'invention.

Dans les deux cas, pour la commodité de la représentation, le générateur d'ozone a été représenté sous la forme d'un générateur élémentaire, étant entendu qu'un générateur industriel est constitué d'une pluralité de ces éléments montés électriquement en parallèle.

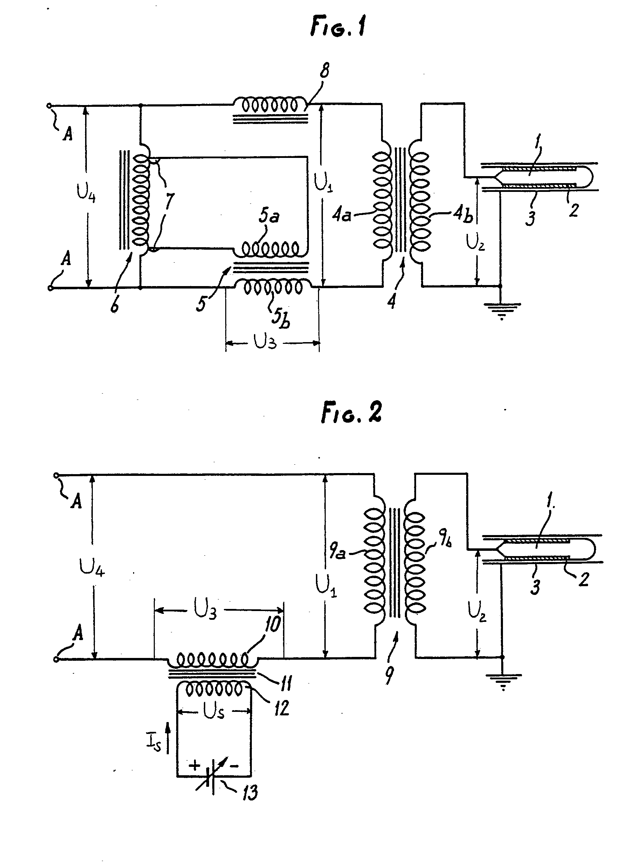

Suivant la figure 1, correspondant à un schéma classique d'alimentation, le générateur d'ozone 1 est alimenté en énergie électrique par application d'une haute tension alternative $U_2$ entre la partie métallique interne du tube de verre 2 et le tube acier 3. Cette haute tension $U_2$ prélevée au secondaire 4b d'un transformateur élévateur 4 doit être fixée selon la production d'ozone requise entre par exemple 8 et 18 kV par modification de la tension primaire $U_1$ appliquée au primaire 4a de ce transformateur. La variation de cette tension $U_1$ est obtenue grâce à un transformateur 5 dont le secondaire 5b est en série dans le circuit primaire 4a du transformateur 4 et dont le primaire 5a est relié à un autotransformateur 6 dont les bornes d'alimentation sont soumises à la tension $U_4$ du secteur A. En modifiant la position des curseurs 7 de l'autotransformateur 6, on fait varier la tension $U_3$ produite au secondaire 5b du transformateur 5, tension qui vient s'ajouter vectoriellement à la tension $U_4$ du secteur. On obtient ainsi au primaire 4a du transformateur 4 une tension $U_1$ dont la variation permet l'obtention au secondaire 4b d'une tension $U_2$ d'alimentation du générateur d'ozone qui peut être ajustée à tout valeur comprise dans les limite indiquées.

Le circuit primaire 4a du transformateur 4 comporte en série une inductance 8 destinée d'une part à améliorer le facteur de puissance du système, d'autre part à le protéger contre tout court-circuit pouvant naître dans le générateur.

La figure 2 correspond au schéma d'alimentation en énergie électrique d'un générateur d'ozone suivant l'invention. Elle permet, par comparaison avec la précédente, d'apprécier la grande simplification apportée par l'invention.

La haute tension alternative $U_2$, appliquée comme précédemment au générateur d'ozone 1, est prélevée au secondaire 9a d'un transformateur à fuites magnétiques 9 et est égale au produit de la tension $U_1$ appliquée au primaire 9a par le rapport de transformation. Cette tension $U_1$ est la somme vectorielle de la tension $U_4$ du secteur A et de la tension $U_3$ aux bornes d'une inductance variable 10 disposée en série dans le circuit. Cette inductance est du type à noyau magnétique 11 dont la réluctance peut être modifiée grâce à un enroulement spécial 12 parcouru par un courant continu de valeur réglable $I_s$ fourni par une source 13 et engendrant dans le noyau un flux d'induction magnétique unidirectionnel se superposant au flux alternatif produit par l'enroulement parcouru par le courant alternatif alimentant le transformateur 9. A tout accroissement de la valeur $I_s$ correspond une diminution de la valeur de l'inductance 10 et dont de la tension $U_3$ à ses bornes, avec, pour conséquence, une augmentation des tensions $U_1$ et $U_2$ appliquées aux bornes du transformateur 9 et donc de la puissance introduite dans le générateur 1, entraînant une augmentation de la production d'ozone.

Inversement, une diminution de cette valeur $I_s$ engendre une diminution de cette puissance et donc de la production d'ozone.

On a réalisé, selon l'invention, une alimentation électrique pour un générateur d'ozone comportant

3

dans une même enceinte 86 générateurs élémentaires disposés électriquement en parallèle. La puissance installée du transformateur à fuites magnétiques était de 40 kVA, au lieu des 65 kVA normalement requis pour un transformateur classique.

Les résultats figurant dans le tableau ci-après ont été obtenus, la signification des symboles étant la suivante:

$U_4$: tension du réseau en volts
$U_s$: tension continue en volts aux bornes de l'enroulement de saturation de l'inductance
$I_s$: courant continu de saturation de l'inductance, en ampères
$U_1$: tension au primaire du transformateur d'alimentation du générateur d'ozone en volts
$U_2$: tension au secondaire de ce transformateur en kV
W: puissance consommée par le générateur en kW
P: production d'ozone en grammes par heure.

| $U_4$ | $U_s$ | $I_s$ | $U_1$ | $U_2$ | W | P |
|------|------|------|------|------|------|------|
| 380 | 6 | 3 | 240 | 10,7 | 2 | 130 |
| 380 | 6,8 | 3,3 | 260 | 11,6 | 5 | 360 |
| 380 | 8 | 3,9 | 290 | 12,9 | 10 | 750 |
| 380 | 10 | 4,8 | 310 | 13,8 | 15 | 1.100 |
| 380 | 12 | 6 | 330 | 14,7 | 20 | 1.430 |
| 380 | 17,8 | 9,4 | 360 | 16,1 | 25 | 1.630 |
| 380 | 21,2 | 11,2 | 375 | 16,7 | 28 | 1.700 |

Le dispositif suivant l'invention, remarquable par sa simplicité et sa fiabilité, puisque constitué d'éléments purement statiques, ne nécessitant aucun entretien, permet d'alimenter dans des conditions économiques particulièrement avantageuses des générateurs d'ozone dont la puissance consommée peut atteindre plusieurs centaines de kilowatts.

Dans l'exemple traité, la mise en place du dispositif suivant l'invention a permis de réaliser une économie de 40% sur le coût de l'alimentation électrique du générateur d'ozone.

**Revendication**

Dispositif d'alimentation en énergie électrique d'un générateur d'ozone (1) soumis à une haute tension alternative (U2), obtenue à partir du réseau de distribution électrique en basse tension (U4) grâce à un transformateur élévateur de tension (9) dont le secondaire (9b) est relié audit générateur d'ozone, et dont le primaire (9a) est alimenté en basse tension ($U_4$) et comporte, en série, une inductance variable (10), caractérisé en ce que le dit transformateur (9) est du type à fuites magnétiques, et en ce que ladite inductance (10) est du type à noyau magnétique saturable (11) ayant un enroulement de commande (12) alimenté à partir d'une source (13) de tension continue variable ($U_s$).

**Patentanspruch**

Schaltung zur Versorgung eines Ozongenerators (1) mit elektrischer Energie, wobei diese unter einer hohen Wechselspannung (U2) steht, die mittels eines unter niedriger Spannung (U4) stehenden Stromleitungsnetzes mit einem Aufspanntransformator (9), dessen Sekundärwicklung (9b) mit dem Ozongenerator verbunden ist und an dessen Primärwicklung (9a) die Niederspannung (U4) anliegt und der mit einer variablen Induktivität (10) in Reihe geschaltet ist, dadurch gekennzeichnet, daß der Transformator (9) ein Streufeldtransformator ist und daß die Induktivität (10) einen sättigbaren Magnetkern (11) sowie eine Steuerwicklung (12) aufweist, an der eine veränderliche Gleichspannung ($U_s$) anliegt.

**Claim**

A device for supplying electrical energy to an ozone generator (1) subjected to high alternating voltage ($U_2$), obtained from the low-voltage ($U_4$) electricity supply network by means of a voltage-raising transformer (9) whose secondary winding (9b) is connected to said ozone generator and whose primary

4

**0 136 225**

winding (9a) has a low-voltage supply ($U_4$) and comprises, in series, a variable inductive resistor (10), characterized in that said transformer (9) is of the leakage field type, and in that said inductive resistor (10) is of the type comprising a saturable magnetic core (11) having a control winding (12) supplied from a source (13) of variable direct-current voltage ($U_s$).

5

# Fig.1

# Fig.2